# EUROPÄISCHE PATENTSCHRIFT

(11) **EP 1 620 330 B1**
(45) Veröffentlichungstag und Bekanntmachung des Hinweises auf die Patenterteilung: **29.09.2010**
(21) Anmeldenummer: 04727870.0
(22) Anmeldetag: 16.04.2004
(51) Int. Cl.: B65D 90/02, B65D 90/50

(54) **BEHÄLTER AUF DER BASIS VON VERBUNDELEMENTEN**
CONTAINER BASED ON COMPOSITE ELEMENTS
RECIPIENT A BASE D'ELEMENTS COMPOSITES

(30) Priorität: 25.04.2003 DE 10318982
(43) Veröffentlichungstag der Anmeldung: 01.02.2006
(73) Patentinhaber: BASF SE, 67056 Ludwigshafen (DE)
(72) Erfinder: DIERSSEN, Jens, B-3080 Tervuren (BE); FUCHS, Harald, 82194 Grobenzell (DE)
(86) Internationale Anmeldenummer: PCT/EP2004/004046
(87) Internationale Veröffentlichungsnummer: WO 2004/096672

(56) Entgegenhaltungen:
- EP-A- 0 410 503
- DE-A- 10 056 375
- DE-A- 10 102 091
- DE-A- 10 135 213
- FR-A- 1 327 216
- GB-A- 2 155 601
- US-A- 5 054 645

## Beschreibung

Die Erfindung bezieht sich auf Behälter, bevorzugt Tanks für Flüssigkeiten, mit einem Füllvolumen zwischen 1 m³ und 20000 m³, bevorzugt zwischen 1 m³ und 2000 m³, besonders bevorzugt zwischen 2 m³ und 1000 m³, insbesondere zwischen 2 m³ und 400 m³. Außerdem betrifft die Erfindung Verfahren zur Herstellung derartiger Behälter. Unter dem Ausdruck "Füllvolumen" ist insbesondere das maximale Volumen zu verstehen, das in den erfindungsgemäßen Behälter bei einer Temperatur von 25°C gefüllt werden kann.

Bekannte Behälter, insbesondere Tank für flüssige Stoffe, bestehen üblicherweise aus versteiften Blechen. Dabei ist es in der Regel notwendig, dass der Behälter aus einem Material gefertigt ist oder Triclad Bleche zum Einsatz kommen, wobei diese Lösungen gerade bei Behältern zur Lagerung von aggressiven Medien je nach Material sehr teuer und schwierig zu verarbeiten sind.

Bei Triclad handelt es sich um ein Material das durch ein Sprengschweißverfahren hergestellt wird und zum Beispiel Schweißverbindungen aus Aluminium und Stahl erst ermöglicht.

Dokument FR 1327216A offenbart einen Behälter für Milch, mit einem Füllvolumen zwischen 15 Liter und 20000 Liter, wobei der Behälter ein Werbundelement enthält, das die folgende Schichtstruktur aufweist:
(i) 1 mm bis 3 mm Metall
(ii) 50 mm
(iii) 1 mm bis 3 mm Metall
wobei die Schicht (i) den Innenraum des Behälters begrenzt und die Schicht (iii) die Außenwand des Behälters darstellt und die Schicht (ii) zwischen der den Schichten (i) und (iii) angeordnet ist.

Sehr teuer und aufwendig ist insbesondere der Bau des gesamten Tanks aus Edelstahl. Weitere Nachteile bei den bekannten Lösungen sind die hohen Wandstärken, die benötigt werden, um Profile insbesondere zur Verstärkung aufzubringen, wobei im allgemeinen teure Spezialelektroden zur Verschweißung der Hollandprofile, Winkelprofile, Verstärkungsprofile, Profilstähle benötigt werden. Gerade durch die Verstärkungsprofile ergibt sich üblicherweise ein hohes Gewicht und ein entsprechender Platzverlust bei gleichzeitig erhöhter Korrosionsanfälligkeit der Schweißnähte, insbesondere in Ballastwassertanks. Im Falle von temperierten Behältern ist das Heizsystem bei Metallkonstruktionen sehr korrosionsanfällig, unter anderem weil die Heizschlangen in Tanks mit Rohrschellen befestigt und schwer zu reinigen sind.

Der vorliegenden Erfindung lag die Aufgabe zugrunde, einen Behälter, insbesondere einen Tank für Flüssigkeiten zu entwickeln, der eine deutlich geringere Neigung zur Korrosion aufweist, insbesondere auch hinsichtlich eines Heizungssystems. Außerdem sollte der Behälter deutlich sicherer bezüglich möglicher Leckagen sein, bevorzugt bei hoher Impaktionssicherheit und guter thermischer Isolation. Auch eine hohe Feuersicherheit wurde angestrebt.

Diese Aufgabe wird erfindungsgemäss durch einen Behälter gemäß Anspruch 1 sowie ein Verfahren gemäß Anspruch 7 gelöst. Weitere Merkmale und besondere Ausführungsformen der Erfindung sind Gegenstand der Unteransprüche.

Die erfindungsgemäßen Behälter auf der Basis der Verbundelemente bieten insbesondere folgende Vorteile:
- Verschiedene Materialien z.B. Edelstahl und normale Stähle z.B. in ST 52 Qualität sind miteinander kombinierbar.
   Versteifungselemente als Korrosionsangriffspunkte sind stark reduziert.
- Einarbeitung, Integration von Heizschlangen in das Elastomer ist möglich.
- Technische Realisierung z.B. durch U-Profile, die im Sandwich aber an der dem Tankinneren zugewandten Seiten angebracht werden.
- Reduzierte Schweißnahtdicke an Heizungsrohren, da im Kunststoff der Schicht (ii) korrosionsgeschützt, damit Benutzung von Schweißautomaten möglich.
- Integration eines Lecksicherungsverfahrens in die Schicht (ii) möglich, z.B. durch einlegen eines sensorischen Netzes, das durch Widerstandsmessung Leckagen aufspürt.
- Isolationseffekt durch die Schicht (ii), dadurch hohe Energieeinsparung bei temperierter Lagerung.
- Weitere Erhöhung des Isolationseffektes durch Zugabe von Füllstoffen, Mikro-Glaskügelchen, Filliten und anderen Stoffen zur Erhöhung der Dämmeigenschaften in der Schicht (ii) möglich.
- Hohe Impaktionssicherheit bei Kollisionen, Explosionen zum Schutz der Ladung.
- Hohe Feuersicherheit durch gute Dämmeigenschaften.

Die Schichten (i) und (iii) können beispielsweise auf üblichen Kunststoffen oder Metallen oder Holz basieren. Z.B. können übliche Kunststoff- oder Metallplatten, beispielsweise Eisen-, Stahl- Kupfer- und/oder Aluminium-platten, mit den erfindungsgemäßen Dicken eingesetzt werden. Bevorzugt sind Stahl oder Eisen. Besonders bevorzugt enthaltend die Schichten (i) und (iii) verschiedene Metalle. Insbesondere besteht die Schicht (i), die den Behälterinnenraum begrenzt, aus Edelstahl, z.B. üblichem, kommerziell erhältlichen Edelstahl und die Schicht (iii) aus einem von Edelstahl verschiedenen Metall, bevorzugt Eisen oder besonders bevorzugt Stahl, beispielsweise üblichem Stahl. Durch die Trennung der Schichten (i) und (iii) durch die Schicht (ii) ist es möglich, verschiedene Metalle miteinander ohne größere Probleme zu kombinieren.

Der erfindungsgemäße Behälter weist der in der Schicht (ii) allgemein bekannte Heizelemente auf, bevorzugt Heizschlangen, durch die bevorzugt eine Heizflüssigkeit bevorzugt mit einer Temperatur zwischen 0 und 90°C geleitet wird. Diese Heizschlangen können zwischen den Schichten (i) und (iii) montiert und anschließend mit den flüssigen Ausgangskomponenten zur Herstellung von (ii) umgossen werden. Dabei liegen die Heizschlagen bevorzugt an der Schicht (i), die die Innenwand des Behälters darstellt, an. Besonders bevorzugt liegt zwischen den Heizschlangen und der Schicht (iii), die die Außenwand darstellt, die Schicht (ii) vor, d.h. die Schicht (ii) isoliert thermisch die Heizschlangen von der äußeren Umgebung.

Bevorzugt weist der erfindungsgemäße Behälter in der Schicht (ii) ein Detektionssystem für Leckagen, beispielsweise ein sensorisches Netz auf der Basis von elektrischen Leitungen, mit dem durch Widerstandsmessungen Leckagen detektiert werden auf. Entsprechende Detektionssysteme sind allgemein bekannt und kommerziell erhältlich. Wie die Heizsysteme kann auch das Detektionssystem zwischen den Schichten (i) und (iii) positioniert und anschließend mit den Ausgangskomponenten zur Herstellung von (ii) umgossen und damit fixiert werden.

Bei dem erfindungsgemäßen Behälter handelt es sich um einen Tank für Ölprodukte und/oder petrochemische Produkte. Besonders bevorzugt handelt es sich bei den erfindungsgemäßen Behältern um Treibstofftanks, insbesondere temperierte Schweröltanks von Schiffen.

Die erfindungsgemäßen Behälter können eine eckige oder runde Form aufweisen, bevorzugt eine runde Form, besonders bevorzugt eine Kugelform.

Das Verfahren zur Herstellung von den erfindungsgemäßen Behältern kann bevorzugt derart ausgestaltet sein, dass man mittels der Schicht (i) die innere Wand des Behälters, die den Innenraum des Behälters begrenzt, herstellt, beispielsweise formt oder geformte Bleche entsprechend verschweißt, anschließend die Schicht (iii) um die Schicht (i) formt, beispielsweise entsprechend geformte Bleche mittels Abstandshaltern (iv) auf der Innenwand, d.h. der Schicht (i) fixiert, beispielsweise verschweißt, und dann in einem oder mehreren Schritten die Schicht (ii) zwischen den Schichten (i) und (iii) herstellt, bevorzugt durch Einfüllen der flüssigen Ausgangskomponenten zur Herstellung von Polyisoscyanat-Polyadditionsprodukten zwischen die Innenwand (i) und die Außenwand (iii).

Alternativ kann die Herstellung der erfindungsgemäßen Behältern dadurch erfolgen, dass man vorgefertigte Verbundelemente enthaltend die Schichten (i), (ii), und (iii) zu dem Behälter zusammenfügt, bevorzugt verschweißt und bevorzugt anschließend einen gegebenenfalls verbleibenden Raum an den Nahtstellen der vorgefertigten Verbundelementen zwischen den Schichten (i) und (iii) mit (ii) auffüllt.

Die erfindungsgemäß bevorzugten Verbundelemente, auch als SPS-Elemente (Sandwich-Plate-System) bekannt, beinhalten einen Verbund aus Metall und Kunststoff. Durch die Haftung des Kunststoffs an den zwei Metallschichten entstehen Verbundelemente mit außerordentlichen Vorteilen gegenüber bekannten Stahl Konstruktionen. Derartige SPS-Elemente sind bekannt aus den Schriften US 6 050 208, US 5 778 813, DE-A 198 25 083, DE-A 198 25 085, DE-A 198 25 084, DE-A 198 25 087 und DE-A 198 35 727.

Im Folgenden soll die Ausgangskomponenten sowie die Verfahren zur Herstellung der Verbundelemente, die den erfindungsgemäßen Behälter bilden, ausführlich dargestellt werden. Dabei beziehen sich die Angaben sowohl auf die Herstellung der Behälters aus vorgefertigten Verbundelementen, die zum Behälter zusammengesetzt werden als auch auf die Fertigung des Behälters durch Formung der Innenwand (i), anschließende Herstellung der Außenwand (iii) in geeignetem Abstand, der die Dicke der Schicht (ii) definiert, um die Innenwand (i) und anschließendes Ausfüllen des Raumes zwischen (i) und (iii) in einem oder mehreren Schritten mit dem Kunststoff (ii). Die vorgefertigten Verbundelemente könne beispielsweise durch verschweißen oder verkleben zu den gewünschten Behältern zusammengesetzt werden.

Die Fixierung der Schicht (iii) auf und mit der Schicht (i) kann beispielsweise mittels geeigneter Abstandshalter erfolgen, die aus Metall, Holz oder Kunststoff, bevorzugt Metall beispielsweise Triclad bestehen können und bevorzugt mit den Schichten (i) und (iii) verklebt oder verschweißt, bevorzugt verschweißt werden. Bevorzugt wird der mit (ii) zu befüllende Raum zwischen (i) und (iii) mit Ausnahme von Öffnungen, die dem Befüllen dienen, vollständig mit den Elementen abgedichtet, damit eine Herauslaufen von flüssigen Komponenten zur Herstellung von (ii) aus dem Raum zwischen (i) und (iii) vermieden wird. Bei den Elementen kann es sich beispielsweise um Flacheisen handeln, deren Höhe durch die gewünschte Dicke der Schicht (ii) gewählt werden kann. Die Länge der Flacheisen kann sich nach den Abmessungen, d.h. der Breite und Länge des mit (ii) zu befüllenden Raumes zwischen (i) und (iii) bemessen. Die Dicke, d.h. die Abmessung parallel zu den Schichten (i) und (iii), der Flacheisen kann bevorzugt zwischen 10 mm und 100 mm betragen, besonders bevorzugt zwischen 20 mm und 50 mm. Bei den Elementen handelt es sich somit bevorzugt um Flacheisen, die auf der Schicht (i) liegend bevorzugt eine Breite aufweisen, die gleich oder größer ist als ihre Höhe, wobei ihre Höhe die Dicke der Schicht (ii) definiert. Wie auch die Schichten (i) und (iii) können die Elemente (iv) gereinigt, gestrahlt, z.B. gestrahlt und in anderer geeigneter und bekannter Weise vorbehandelt werden. Die Elemente können auf Metall, bevorzugt Eisen oder Stahl, Holz und/oder Kunststoff basieren, z.B. bekannten harten Kunststoffen, die eine ausreichende Festigkeit besitzen, um gegebenenfalls die Schicht (iii) zu tragen, beispielsweise Polyurethan, Polyamid, Polystyrol, Polyoxymethylen, Polycarbonat, Polyethylen, Polypropylen. Als Metalle kommen beispielsweise Aluminium, Kupfer, Eisen und bevorzugt allgemein bekannte Arten von Stahl in Frage.

Für das Verkleben von Elemente mit (i) und/oder (iii) können allgemein bekannte Kleber verwendet werden, die zum Verkleben der für (i), (iii) und (iv) gewählten Materialien als Klebstoffe bekannt sind. Bevorzugt wird man die Elemente mittels eines ein- oder zweikomponentigen, lösungsmittelfreien oder lösungsmittelhaltigen Klebers auf der Basis von Epoxidharzen und/oder Methacrylaten und/oder Polyurethanen mit der Schicht (i) und gegebenenfalls (iii) verkleben. Dabei gewährleistet der Kleber bevorzugt eine Zug-Scherfestigkeit von größer 2 MPa, eine Scherfestigkeit, d.h. zwischen den Schichten (i), Elemente, (iii)/Kleber, von größer 2 MPa und bevorzugt einen dauerhaften Verbund unter Einfluss von Korrosion und Feuchtigkeit, wobei bevorzugt auf den Einsatz eines Haftvermittlers, d.h. Primers, verzichtet werden kann. Dies gilt insbesondere dann, wenn es sich bei Elemente und der mit (iv) zu verlebenden Schicht (i) und/(iii) um Metall handelt.

Bei der Schicht (ii) kann es sich um allgemein bekannte Kunststoffe handeln, bevorzugt basiert (ii) auf Polyisocyanat-Polyadditionsprodukte, besonders bevorzugt Polyurethane. Diese Polyisocyanat-Polyadditionsprodukte, Verfahren zu ihrer Herstellung und ihre Rohstoffe sind allgemein bekannt und vielfältig beschrieben. Üblicherweise werden die Polyisocyanat-Polyadditionsprodukte hergestellt durch Umsetzung der flüssigen Ausgangsstoffe (a) Isocyanat und (b) gegenüber Isocyanaten reaktive Verbindungen. Die Ausgangskomponenten zur Herstellung des Knuststoffes werden bevorzugt in flüssiger Form in den zu befüllenden Raum zwischen (i) und (iii) gefüllt. Deshalb ist es vorteilhaft, dass man den mit den flüssigen Ausgangskomponenten zur Herstellung von (ii) zu füllenden Raum zwischen den Schichten (i) und (iii) durch die Elemente mit Ausnahmen von Öffnungen, die dem Befüllen mit den Ausgangskomponenten zur Herstellung von (ii) dienen, derart abdichtet, dass ein unerwünschtes Herauslaufen der flüssigen Ausgangskomponenten verhindert wird, und anschließend die flüssigen Ausgangskomponenten zur Herstellung von (ii) in den zu befüllenden Raum einfüllt.

Die erfindungsgemäßen Verbundelemente weisen als vorgefertigte Teile, die zum Behälter zusammengesetzt werden können, bevorzugt eine Breite von 0,2 m bis 5 m, bevorzugt 0,5 bis 3 m, und eine Länge von 0,5 m bis 10 m, bevorzugt 1 m bis 5 m, auf, d.h. der Raum, der von den Elementen begrenzt wird, weist bevorzugt diese Abmessungen auf. Die Schicht (i), auf der die Elemente (iv) durch Verkleben befestigt werden, ist bevorzugt weitgehend horizontal ausgerichtet. Bevorzugt ist die Schicht (iii) weitgehend parallel zur schicht (i) ausgerichtet.

In der Schicht (ii) können gegebenenfalls verstärkend wirkende Materialen vorliegen. Z.B. kann man in den zu befüllenden Raum zwischen (i) und (iii) flächige, gegebenenfalls dreidimensionale Gebilde einlegen, die einen Teil der an den Grenzflächen von Kunststoff und Metall wirkenden Spannungskräfte reduziert, und anschließend (ii) einfüllen. Bevorzugt handelt es sich bei dem Gebilde um ein Gitter, eine durchlöcherte Platte und/oder ein Geflecht, das flächig und gegebenenfalls dreidimensional verformt ist. Unter dem Ausdruck "dreidimensional verformt" ist zu verstehen, dass es sich bei (vi) nicht um ein ebenes Gebilde handeln muss, sondern regelmäßige oder unregelmäßige Unebenheiten, Kanten oder ähnliches aufweisen. Beispielsweise kann als Gebilde ein Gebilde oder Formteil eingesetzt werden, das eine regelmäßige oder unregelmäßige, Ziehharmonika-artige Faltung oder Wellenform aufweist, bei der die oberen und unteren Kanten bis an die Oberfläche von (i) und/oder (iii) reichen. Diese Gebilde können beispielsweise auf Glasfasern, Metall oder Kunststoff basieren. Derartige Gitter, Platten oder Geflechte, beispielsweise Metallgitter, Metallplatten, Metalldrahtgeflechte, Glasfasermatten oder gelöcherte Kunststofffolien oder -platten sind kommerziell erhältlich oder in einfacher Weise nach allgemein bekannten Verfahren durch den Fachmann herstellbar.

Die Ausgangsstoffe zur Herstellung von (ii) werden bevorzugt kontinuierlich ohne Unterbrechung in einem einzigen Arbeitsschritt in den zu befüllenden Raum zwischen (i) und (iii) eingetragen, besonders bevorzugt wird man die Ausgangsstoffe mittels einer Hochdruckapparatur über einen oder mehrere Mischköpfe eintragen, beispielsweise einfüllen.

Die Ausgangsstoffe zur Herstellung von (ii) werden, nicht erfindungsgemäss, in flüssigem Zustand in den Raum zwischen (i) und (iii) gefüllt, wobei bevorzugt während dieses Füllvorgangs ein Unterdruck in dem zu füllenden Raum zwischen (i) und (iii) erzeugt wird. Das Befüllen kann beispielsweise durch Öffnungen in (i) und/oder (iii) erfolgen. Dies bietet den Vorteil, dass die Flüssigkeit in den Raum "gesaugt" und auch kleine Hohlräume mit der Flüssigkeit ausgefüllt werden. Bevorzugt beträgt der Unterdruck in dem zu befüllenden Raum 0,2 bar bis 0,8 bar, d.h. der Druck in der zu befüllenden Form ist 0,8 bis 0,2 bar niedriger als der Umgebungsluftdruck. Der Unterdruck, der beispielsweise durch allgemein bekannte Vakuumpumpen erzeugt werden kann, wird bevorzugt dadurch erreicht, dass (i) und/oder (iii) zusätzlich zu der oder den Öffnungen in (i) und/oder (iii), über die die Ausgangsstoffe zur Herstellung von (ii) eingetragen werden, über mindestens eine weitere Öffnung verfügen, über die der Unterdruck angelegt wird. Bevorzugt wird zwischen einer Vakuumpumpe, die den Unterdruck erzeugt, und der Öffnung in (i) ein Schlauch zwischengeschaltet. Dieser Schlauch kann beispielsweise an (i) gepresst oder verklebt werden. Die Mengen an Ausgangsstoffen zur Herstellung von (ii) sind nur schwierig so zu bemessen, dass gerade der zu befüllende Raum gefüllt wird, aber ein Überlaufen verhindert wird. Deshalb wird bevorzugt eine größere Mengen an Ausgangskomponenten zur Herstellung von (ii) in den Raum zwischen (i) und (iii) gegeben, als dieser aufnehmen kann. Der resultierende Überlauf wird bevorzugt über Öffnungen abgeführt. Sobald der Raum zwischen (i) und (iii) mit den Ausgangskomponenten zur Herstellung von (ii) vollständig gefüllt ist, kann anhand eines Anstiegs der Flüssigkeit im Schlauch, der bevorzugt transparent ist, die Befüllung beendet und die Öffnungen verschlossen werden. Das Verschließen der Öffnungen kann beispielsweise mit einem Kunststoff - oder Metallpfropfen bevorzugt mit einem Schraubverschluss, der sich entweder im Überlaufgefäß oder bevorzugt zwischen Überlaufgefäß und (i) und/oder (iii) befindet, erfolgen. Die Öffnungen bleiben bevorzugt bis zum Ende des Aushärtevorgangs der Mischung (a) und (b) durch den fixierten Mischkopf verschlossen.

Üblicherweise weisen die Schichten (i) und (iii) keine Merkmale auf, die zu einer Befestigung eines Ausflußendes zur Befüllung des Raumes zwischen (i) und (iii) mit Flüssigkeiten dienen können. Bei dem Ausdruck "Ausflußende" kann es sich um übliche Einrichtungen handeln, mit Hilfe derer Flüssigkeiten abgefüllt werden, beispielsweise Tankstutzen, Schlauchenden, Mischköpfe, Statikmischer oder ähnliches. Bevorzugt handelt es sich bei dem Ausflußende um einen Mischkopf. Derartige Mischköpfe sind allgemein bekannt und beispielsweise in Zusammenhang mit üblichen Dosiereinrichtungen für Polyurethansysteme kommerziell erhältlich. Die Befestigung des Ausflußendes, bevorzugt des Mischkopfes kann bevorzugt derart erfolgen, dass das Ausflußende der Fördereinrichtung oder eine Halterung für das Ausflußende der Fördereinrichtung an mindestens drei Stellen, bevorzugt drei bis sechs Stellen, besonders bevorzugt vier oder fünf Stellen mit der Schicht (i) verschraubt wird. Bevorzugt wird die Flüssigkeit durch mindestens eine Öffnung in (i) und/oder (iii) in den Raum zwischen (i) und (iii) gefüllt. Bevorzugt kann man zur Befestigung beispielsweise eines Mischkopfes Bolzen mit einem Gewinde, die zur Befestigung des Mischkopfes oder einer Halterung für den Mischkopf dienen, in die Schicht (i) schießt. Diese Bolzen können bevorzugt an der vom Gewinde abgewandten Seite spitz zulaufen, um sie einfacher in die Schicht (i) einbringen zu können. Die Bolzen weisen bevorzugt einen Durchmesser von 6 mm bis 20 mm und eine Länge von 8 mm bis 42 mm auf. Das Gewinde, das nach der Fixierung der Bolzen nach außen gerichtet ist, d.h. auf der Seite von (i), die von (iii) abgewandt ist, hat bevorzugt eine Länge von 4 mm bis 30 mm. Das Einbringen der Bolzen erfolgt beispielsweise durch Schiessen mit einem Bolzenschubwerkzeug, das kommerziell z.B. bei der Firma Hilti erhältlich ist. Bevorzugt weist (i) somit Gewinde auf, mit Hilfe derer das Ausflußende an der Öffnung (v), durch die die Flüssigkeit eingefüllt wird, mit (i) verschraubt wird. Bevorzugt kann man zur Verbesserung der Dichtung zwischen dem Ausflußende und der Schicht (i) zwischen der Schicht (i) und dem Mischkopf einen O-Ring aus einem elastischen Material fixieren. Derartige O-Ringe sind allgemein bekannt und können in ihren Abmessungen auf den Durchmesser der Öffnung und den Mischkopf abgestimmt werden. Bevorzugt fixiert man den Mischkopf somit dicht an der Öffnung in (i) oder (iii), durch die die Eintragung der Ausgangsstoffe erfolgt.

Besonders bevorzugt befestigt man nicht direkt das Ausflußende mit der Schicht (i), sondern fixiert das Ausflußende an einer Halterung, die mit (i) verschraubt wird. Bei dieser Halterung, die aus üblichen Materialien, beispielsweise Kunststoffen, Holz oder bevorzugt üblichen Metallen bestehen kann, handelt es sich bevorzugt um eine Konstruktion, die über Bohrungen verfügt, durch die die auf (i) fixierten Gewinde geführt und beispielsweise mittels entsprechender Muttern befestigt werden. Außerdem weist die Halterung Befestigungselemente für das Ausflußende auf, beispielsweise Steckverbindungen, Schraubverbindungen oder Kanten, mit denen das Ausflußende durch elastische Bänder mit der Halterung verspannt werden kann. Besonders bevorzugt wird das Ausflußende an mindestens drei Punkten mit der Halterung befestigt, um ein Verkanten zu vermeiden. Bevorzugt wird man somit eine Halterung an mindestens drei Gewinden, die an (i) befestigt sind, verschrauben und an dieser Halterung den Mischkopf fixieren. Die Bolzen können nach Fertigstellung der Verbundelemente beispielsweise an der Oberfläche von (i) abgesägt werden.

Das Befüllen des Raumes zwischen (i) und (iii) kann mit üblichen Fördereinrichtungen, bevorzugt kontinuierlich, durchgeführt werden, beispielsweise mit Hoch- und Niederdruckmaschinen, vorzugsweise Hochdruckmaschinen. Bevorzugt erfolgt das Befüllen mit einer Hochdruckmaschine über einen oder mehrere, bevorzugt einen Mischkopf, in dem die Ausgangskomponenten vermischt werden, in einem einzigen Arbeitsschritt, bevorzugt Injektionsvorgang. In einem einzigen Injektionsvorgang bedeutet, dass die Befüllung des Raumes zwischen (i) und (iii) beispielsweise mit den Ausgangsstoffen zur Herstellung von (ii) vor der vollständigen Befüllung nicht unterbrochen wird. Die Ausgangsstoffe werden somit bevorzugt in einem einzigen Schuss unter Druck in den Raum zwischen (i) und (iii) gegeben. Dies gilt insbesondere dann, wenn es sich bei der Flüssigkeit um eine reaktive Mischung handelt, die mit der Reaktion aushärtet. Bevorzugt trägt man somit die Ausgangsstoffe mittels einer Hochdruckapparatur über einen oder mehrere, bevorzugt einen Mischkopf ein. Die Befüllung des Raumes zwischen (i) und (iii) kann sowohl in vertikaler Ausrichtung von (i) und (iii), als auch in horizontaler Ausrichtung von (i) und (iii) erfolgen.

Die Schichten (i) und (iii) können wie eingangs dargestellt bevorzugt als übliche Kunststoff-, Holz- oder bevorzugt Metallplatten, beispielsweise Eisen-, Stahl- Kupfer- und/oder Aluminium-platten, mit den erfindungsgemäßen Dicken eingesetzt werden. Bevorzugt sind Stahl oder Eisen.

Sowohl (i) als auch (iii) können beschichtet, beispielsweise grundiert, geprimert, lackiert und/oder mit üblichen Kunststoffen beschichtet bei der Herstellung der erfindungsgemäßen Verbundelemente eingesetzt werden. Bevorzugt werden (i) und (iii) unbeschichtet und besonders bevorzugt beispielsweise durch übliches Sandstrahlen gereinigt eingesetzt.

Bevorzugt kann man den zu befüllenden Raum trocknen. Dies bietet den Vorteil, dass insbesondere zu befüllende flüssige Komponenten, die gegenüber Wasser reaktiv sind, beispielsweise Isocyanate, nicht in unerwünschten Nebenreaktion abreagieren. Das Trocknen, das bevorzugt direkt vor dem Befüllen stattfindet, kann beispielsweise mittels heißer Luft oder mittels Pressluft erfolgen. Des weiteren kann man den zu befüllenden Raum zwischen (i) und (iii) durch eine Erwärmung von (i) und/oder (iii) auf eine Temperatur von 20 bis 150°C für eine Dauer von 10 min bis 180 min trocknen. Bevorzugt kann man den zu befüllenden Raum zwischen (i) und (iii) durch ein Gebläse trocknen, das Luft durch Öffnungen (iv) und (v) in (i) und/oder (iii) durch den zu befüllenden Raum zwischen (i) und (iii) leitet.

Bevorzugt handelt es sich bei der oder den Öffnungen um Bohrungen in (i) und/oder (iii) mit einem Durchmesser von 0,5 bis 5,0 cm in (i) und/oder (iii).

Der Raum, der zwischen (i) und (iii) mit den Ausgangsstoffen zur Herstellung von (ii) gefüllt wird, muss nicht den ganzen Raum zwischen (i) und (iii) darstellen. Sowohl (i) als auch (iii) können an den Rändern über (ii) überstehen, d.h. nur in einem Teilbereich von (i) und (iii) erfolgt eine Bindung von (i) über (ii) an (iii). Beispielsweise kann der Raum zwischen (i) und (iii) vor der Befüllung mit den Ausgangsstoffen derart abgedichtet werden, dass sich die Dichtung innerhalb des von (i) und (iii) umschlossenen Raumes befindet und Ränder von (i) und/oder (iii) überstehen.

Die Förderleistung kann in Abhängigkeit des zu befüllenden Volumens variiert werden. Um eine homogene Durchhärtung von (ii) zu gewährleisten, wird die Förderleistung und Fördereinrichtung bevorzugt derart gewählt, dass der zu befüllende Raum innerhalb von 0,5 bis 20 min mit den Komponenten zur Herstellung von (ii) gefüllt werden kann. Bevorzugt handelt es sich Niederdruck oder besonders bevorzugt Hochdruckmaschinen, bevorzugt mit Kolbendosierung, besonders bevorzugt Axialkolbendosierung, wobei bevorzugt der Vorratsbehälter mit Rührwerk und bevorzugt temperierbar ausgestaltet ist und bevorzugt ein Kreislauf Vorratsbehälter-Mischkopf-Vorratsbehälter vorliegt, wobei bevorzugt die Austragsleistung 0,1 bis 3,0 kg/sec beträgt.

Um ein Verlust an Ausgangskomponenten zu verhindern, hat es sich daher als vorteilhaft erwiesen, die zu befüllende Form sehr genau auf ihre Dichtigkeit zu überprüfen. Üblicherweise werden die Schichten (i) und (iii) in geeigneter Anordnung, beispielsweise parallel zueinander, fixiert. Der Abstand wird üblicherweise so gewählt, dass der Raum zwischen (i) und (iii) eine Dicke von 10 bis 300 mm aufweist. Die Fixierung von (i) und (iii) kann beispielsweise durch Abstandshalter z.B. in einer Form oder geeigneten Halterung erfolgen. Die Ränder des Zwischenraumes werden üblicherweise derart abgedichtet, dass der Raum zwischen (i) und (iii) zwar mit der Flüssigkeit bzw. den Ausgangskomponenten zur Herstellung von (ii) vollständig gefüllt werden kann, ein Herausfließen dieser Ausgangskomponenten vor der vollständigen Befüllung aber verhindert wird. Das Abdichten kann mit üblichen Kunststoff-, Papier- oder Metallfolien und/oder -platten, die beispielsweise verklebt, verschweißt oder angepresst werden und die gegebenenfalls auch als Abstandshalter dienen können, erfolgen. Dieses bevorzugte Abdichten bezieht sich nicht auf die bevorzugten Öffnungen (v), die eingangs dargestellt wurden.

Die Überprüfung der Dichtigkeit von dem Raum vor der Befüllung mit den Ausgangskomponenten erfolgt bevorzugt durch Druckdifferenzmessung. Unter dem Ausdruck Druckdifferenzmessung ist zu verstehen, dass man versucht, eine Druckdifferenz zwischen dem Raum (R) und der äußeren Umgebung über einen bestimmten Zeitraum aufzubauen, beispielsweise indem man versucht, in einen Unter- oder Überdruck im Verhältnis zur äußeren Umgebung zu erreichen. Dies kann durch übliche Vakuumpumpen oder allgemein bekannte Kompressoren, die Luft oder Gas in den Raum pumpen, erreicht werden. Kann ein stabiler Über- oder Unterdruck in den Raum erzeugt werden, so deutet dies auf eine ausreichend dichte Kavität hin, die mit den Ausgangskomponenten zur Herstellung von (ii) gefüllt werden kann. Dabei ist bevorzugt zu beachten, dass man die Öffnungen, die man zum Befüllen von mit den Ausgangskomponenten den Raum bzw. als Entlüftungsöffnungen bzw. als Überlauföffnungen zum Austritt von überschüssigen Ausgangskomponenten vorsieht, ebenfalls vorübergehend abdichtet. Dabei kann gegebenenfalls mindestens eine dieser Öffnungen dazu dienen, Vakuumpumpe oder Kompressor an den Raum anzuschließen.

Bevorzugt enthält die Flüssigkeit zur Herstellung von (ii) (a) Isocyanate und (b) gegenüber Isocyanaten reaktive Verbindungen. Die Schicht (ii) stellt somit bevorzugt Polyisocyanat-Polyadditionsprodukte dar. In dieser Schrift sind unter den Ausdrücken "Ausgangsstoffe" oder "Ausgangskomponenten" insbesondere (a) Isocyanate und (b) gegenüber Isocyanaten reaktive Verbindungen zu verstehen, aber gegebenenfalls, soweit sie zum Einsatz kommen, auch (c) Gase, (d) Katalysatoren, (e) Hilfsmittel und/oder (f) Treibmittel.

Bevorzugt führt man die Umsetzung von (a) mit (b) zu (ii) in Gegenwart von 1 bis 50 Volumen% Gase (c) durch. Bevorzugt setzt man als (b) Polymerpolyole ein. Bevorzugt führt man die Umsetzung von (a) mit (b) in Gegenwart von (f) Treibmitteln durch.

Die Ausgangskomponenten zur Herstellung der Polyisocyanat-Polyadditionsprodukte werden üblicherweise bei einer Temperatur von 0 bis 100°C, vorzugsweise von 20 bis 60°C, gemischt und wie bereits beschrieben in den Raum zwischen (i) und (iii) eingebracht. Die Vermischung kann mechanisch mittels eines Rührers oder einer Rührschnecke, bevorzugt aber durch das bei Hochdruckmaschinen übliche Gegenstromprinzip erfolgen, bei dem A- und B-Komponenten-Strahl sich im Mischkopf unter jeweils hohem Druck treffen und vermischen, wobei der Strahl einer jeden Komponente auch geteilt sein kann. Die Reaktionstemperatur, d.h. die Temperatur, bei die Umsetzung erfolgt, beträgt in Abhängigkeit von der Materialdicke üblicherweise > 20°C, bevorzugt 50 bis 150°C.

Die Polyisocyanat-Polyadditionsprodukte (ii) der erfindungsgemäß hergestellten Verbundelemente weisen bevorzugt ein Elastizitätsmodul von >275 MPa im Temperaturbereich von -45 bis +50°C (nach DIN 53457), eine Adhäsion zu (i) und (iii) von > 4 MPa (nach DIN 53530), eine Dehnung von > 30% im Temperaturbereich von -45 bis +50°C (nach DIN 53504), eine Zugfestigkeit von > 20 MPa (nach DIN 53504) und eine Druckfestigkeit von > 20 MPa (nach DIN 53421) auf.

Die Herstellung der erfindungsgemäßen Verbundelemente kann man derart durchführen, dass man zwischen (i) und (iii) Polyisocyanat-Polyadditionsprodukte (ii), üblicherweise Polyurethane, die gegebenenfalls Harnstoff- und/oder Isocyanuratstrukturen aufweisen können, durch Umsetzung von (a) Isocyanaten mit (b) gegenüber Isocyanaten reaktiven Verbindungen gegebenenfalls in Gegenwart von Treibmitteln (f), 1 bis 50 Volumen-%, bezogen auf das Volumen der Polyisocyanat-Polyadditionsprodukte, mindestens eines Gases (c), (d) Katalysatoren und/oder (e) Hilfsmittel herstellt, wobei bevorzugt (ii) an (i) und (iii) haftet. Die Herstellung derartiger Polyisocyanat-Polyadditionsprodukte (ii) ist vielfach beschrieben worden.

Die Oberflächen von (i) und (iii) können vor der Herstellung der Verbundelemente zur Reinigung und Erhöhung der Oberflächenrauhigkeit mit Sand oder Stahlkugeln bevorzugt mit Korund oder Eisenkies gestrahlt werden. Dieses Strahlen kann nach den üblichen Verfahren erfolgen, bei denen das Strahlgut beispielsweise unter hohem Druck auf die Oberflächen auftrifft. Geeignete Apparaturen für eine solche Behandlung sind kommerziell erhältlich.

Durch diese Behandlung der Oberflächen von (i) und (iii), die nach der Umsetzung von (a) mit (b) in Kontakt mit (ii) stehen, führt zu einer deutlich verbesserten Haftung von (ii) an (i) und (iii). Das Strahlen wird bevorzugt direkt vor der Einbringung der Komponenten zur Herstellung von (ii) in den Raum zwischen (i) und (iii) durchgeführt. Die Oberflächen von (i) und (iii), an die (ii) haften soll, sind bevorzugt frei von anorganischen und/oder organischen Stoffen, die eine Haftung vermindern, beispielsweise Staub, Schmutz, Ölen und Fetten oder allgemein als Formtrennmitteln bekannten Stoffen.

Die Ausgangsstoffe (a), (b), (c), (d), (e) und (f) in dem erfindungsgemäßen Verfahren werden im Folgenden beispielhaft beschrieben:
Als Isocyanate (a) kommen die an sich bekannten aliphatischen, cycloaliphatischen, araliphatischen und/oder aromatischen Isocyanate, bevorzugt Diisocyanate in Frage, die gegebenenfalls nach allgemein bekannten Verfahren biuretisiert und/oder iscyanuratisiert worden sein können. Im einzelnen seien beispielhaft genannt: Alkylendiisocyanate mit 4 bis 12 Kohlenstoffatomen im Alkylenrest, wie 1,12-Dodecandiisocyanat, 2-Ethyl-tetramethylendiisocyanat-1,4, 2-Methylpentamethylendiisocyanat-1,5, Tetramethylendiisocyanat-1,4, Lysinesterdiisocyanate (LDI), Hexamethylendiisocyanat-1,6 (HDI), Cyclohexan-1,3- und/oder 1,4-diisocyanat, 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, 1-Isocyanato-3,3,5-trimethyl-5-isocyanatomethylcyclohexan (IPDI), 2,4- und/oder 2,6-Toluylendiisocyanat (TDI), 4,4'-, 2,4'- und/oder 2,2'-Diphenylmethandiisocyanat (MDI), Polyphenylpolymethylen-polyisocyanate und/oder Mischungen enthaltend mindestens zwei der genannten Isocyanate. Außerdem können Ester-, Harnstoff-, Allophanat-, Carbodiimid-, Uretdion- und/oder Urethangruppen enthaltende Di- und/oder Polyisocyanate in dem erfindungsgemäßen Verfahren eingesetzt werden. Bevorzugt werden 2,4'-, 2,2'- und/oder 4,4'-MDI und/oder Polyphenylpolymethylen-polyisocyanate eingesetzt, besonders bevorzugt Mischungen enthaltend Polyphenylpolymethylen-polyisocyanate und mindestens eines der MDI-Isomere.

Als (b) gegenüber Isocyanaten reaktive Verbindungen können beispielsweise Verbindungen eingesetzt werden, die als gegenüber Isocyanaten reaktive Gruppen Hydroxyl-, Thiol- und/oder primäre und/oder sekundäre Aminogruppen aufweisen und üblicherweise ein Moleukargewicht von 60 bis 10000 g/mol aufweisen, z.B. Polyole ausgewählt aus der Gruppe der Polymerpolyole, Polyetherpolyalkohole, Polyesterpolyalkohole, Polythioether-polyole, hydroxylgruppenhaltigen Polyacetale und hydroxylgruppenhaltigen aliphatischen Polycarbonate oder Mischungen aus mindestens zwei der genannten Polyole. Diese Verbindungen weisen üblicherweise eine Funktionalität gegenüber Isocyanaten von 2 bis 6 und ein Molekulargewicht von 400 bis 8000 auf und sind dem Fachmann allgemein bekannt.

Als Komponente (c) zur Herstellung von (ii) können allgemein bekannte Verbindungen eingesetzt werden, die einen Siedepunkt bei einem Druck von 1 bar von kleiner (d.h. bei niedrigeren Temperaturen als) -50°C aufweisen, beispielsweise Luft, Kohlendioxid, Stickstoff, Helium und/oder Neon. Bevorzugt wird Luft eingesetzt. Die Komponente (c) ist bevorzugt gegenüber der Komponente (a), besonders bevorzugt gegenüber den Komponenten (a) und (b) inert, d.h. eine Reaktivität des Gases gegenüber (a) und (b) ist kaum, bevorzugt nicht nachzuweisen. Der Einsatz des Gases (c) unterscheidet sich grundlegend von dem Einsatz üblicher Treibmittel zur Herstellung von geschäumten Polyurethanen. Während übliche Treibmittel (f) flüssig eingesetzt werden oder im Falle der gasförmigen physikalischen Treibmittel in der Polyol-Komponente bis zu einem geringen Prozentsatz löslich sind) und während der Umsetzung entweder aufgrund der Wärmeentwicklung verdampfen oder aber im Falle des Wassers aufgrund der Reaktion mit den Isocyanatgruppen gasförmiges Kohlendioxid entwickeln, wird in der vorliegenden Erfindung die Komponente (c) bevorzugt bereits gasförmig als Aerosol beispielsweise in der Polyolkomponente eingesetzt.

Als Katalysatoren (d) können allgemein bekannte Verbindungen eingesetzt werden, die die Reaktion von Isocyanaten mit den gegenüber Isocyanaten reaktiven Verbindungen stark beschleunigen, wobei vorzugsweise ein Gesamtkatalysatorgehalt von 0,001 bis 15 Gew.%, insbesondere 0,05 bis 6 Gew.%, bezogen auf das Gewicht der insgesamt eingesetzten gegenüber Isocyanaten reaktiven Verbindungen, verwendet wird.

Der Reaktionsmischung zur Herstellung der Polyisocyanat-Polyadidtionsprodukte (ii) können gegebenenfalls (e) Hilfsmittel einverleibt werden. Genannt seien beispielsweise Füllstoffe, oberflächenaktive Substanzen, Farbstoffe, Pigmente, Flammschutzmittel, Hydrolyseschutzmittel, fungistatische, bakteriostatisch wirkende Substanzen und Schaumstabilisatoren.

Als Treibmittel (f) können aus der Polyurethanchemie allgemein bekannte Treibmittel eingesetzt werden, beispielsweise physikalische und/oder chemische Treibmittel. Derartige physikalische Treibmittel weisen im allgemeinen einen Siedepunkt bei einem Druck von 1 bar von größer (d.h. bei höheren Temperaturen als) -50°C auf. Beispiele für physikalische Treibmittel sind z.B. FCKW, HFCKW, HFKW, aliphatische Kohlenwasserstoffe, cycloaliphatische Kohlenwasserstoffe, jeweils beispielsweise mit 4 bis 6 Kohlenstoffatomen oder Gemische dieser Stoffe, beispielsweise Trichlorfluormethan (Siedepunkt 24°C), Chlordifluormethan (Siedepunkt -40.8°C), Dichlorfluorethan (Siedepunkt 32°C), Chlordifluorethan (Siedepunkt -9.2°C), Dichlortrifluorethan (Siedepunkt 27.1 °C), Terafluorethan (Siedepunkt -26.5°C), Hexafluorbutan (Siedepunkt 24.6°C), iso-Pentan (Siedepunkt 28°C), n-Pentan (Siedepunkt 36°C), Cyclopentan (Siedepunkt 49°C). Als chemische Treibmittel, d.h. Treibmittel die aufgrund einer Reaktion, beispielsweise mit Isocyanatgruppen, gasförmige Produkte bilden, kommen beispielsweise Wasser, Hydratwasser haltige Verbindungen, Carbonsäuren, tert.-Alkohole, z.B. t-Butanol, Carbamate, beispielsweise die in der Schrift EP-A 1000955, insbesondere auf den Seiten 2, Zeilen 5 bis 31 sowie Seite 3, Zeilen 21 bis 42 beschrieben Carbamate, Carbonate, z.B. Ammoniumcarbonat und/oder Ammoniumhydrogencarbonat und/oder Guanidincarbamat in Betracht. Bevorzugt werden als Treibmittel (f) Wasser und/oder Carbamate eingesetzt.

Die Treibmittel (f) werden in einer Menge eingesetzt, die ausreicht, um die Dichte von (ii) von 350 bis 1200 kg/m³ zu erhalten. Dies kann mit einfachen Routineexperimenten, die dem Fachmann allgemein geläufig sind, ermittelt werden. Besonders bevorzugt werden die Treibmittel (f) in einer Menge von 0,05 bis 10 Gew.%, insbesondere von 0,1 bis 5 Gew.%, jeweils bezogen auf das Gesamtgewicht der Polyisocyanat-Polyadditionsprodukte, eingesetzt.

Das Gewicht von (ii) entspricht per Definition dem Gewicht der zur Herstellung von (ii) eingesetzten Komponenten (a), (b) und gegebenenfalls (c), (d), (e) und/oder (f).

Zur Herstellung der Polyisocyanat-Polyadditionsprodukte werden die Isocyanate und die gegenüber Isocyanaten reaktiven Verbindungen in solchen Mengen zur Umsetzung gebracht, daß das Äquivalenzverhältnis von NCO-Gruppen der Isocyanate (a) zur Summe der reaktiven Wasserstoffatome der gegenüber Isocyanaten reaktiven Verbindungen (b) undgegebenenfalls (f) 0,85 bis 1,25 : 1, vorzugsweise 0,95 bis 1,15 : 1 und insbesondere 1 bis 1,05 : 1, beträgt. Falls (ii) zumindest teilweise Isocyanuratgruppen gebunden enthalten, wird üblicherweise ein Verhältnis von NCO-Gruppen zur Summe der reaktiven Wasserstoffatome von 1,5 bis 60 : 1, vorzugsweise 1,5 bis 8 : 1, angewandt.

Die Polyisocyanat-Polyadditionsprodukte werden üblicherweise nach dem one shot-Verfahren oder nach dem Prepolymerverfahren, beispielsweise mit Hilfe der Hochdruck- oder Niederdruck-Technik hergestellt.

Als besonders vorteilhaft hat es sich erwiesen, nach dem Zweikomponentenverfahren zu arbeiten und die gegenüber Isocyanaten reaktiven Verbindungen (b), gegebenenfalls die Treibmittel (f) und gegebenenfalls die Katalysatoren (d) und/oder Hilfsmittel (e) in der Komponente (A) (Polyolkomponente) zu vereinigen und bevorzugt innig miteinander zu vermischen und als Komponente (B) die Isocyanate (a) zu verwenden.

Die Komponente (c) kann der Reaktionsmischung enthaltend (a), (b) und gegebenenfalls (f), (d) und/oder (e) zugeführt werden, und/oder den einzelnen, bereits beschriebenen Komponenten (a), (b), (A) und/oder (B). Die Komponente, die mit (c) gemischt wird, liegt üblicherweise flüssig vor. Bevorzugt wird die Komponenten in die Komponente (b) gemischt.

Das Mischen der entsprechenden Komponente mit (c) kann nach allgemein bekannten Verfahren erfolgen. Beispielsweise kann (c) durch allgemein bekannte Beladungseinrichtungen, beispielsweise Luftbeladungseinrichtungen, bevorzugt unter Druck, beispielsweise aus einem Druckbehälter oder durch einen Kompressor komprimiert, z.B. durch eine Düse der entsprechenden Komponente zugeführt werden. Bevorzugt erfolgt eine weitgehende Durchmischung der entsprechende Komponenten mit (c), so daß Gasblasen von (c) in der üblicherweise flüssigen Komponente bevorzugt eine Größe von 0,0001 bis 10, besonders bevorzugt 0,0001 bis 1 mm aufweisen.

Der Gehalt an (c) in der Reaktionsmischung zur Herstellung von (ii) kann in der Rücklaufleitung der Hochdruckmaschine mit allgemein bekannten Messgeräten über die Dichte der Reaktionsmischung bestimmt werden. Die Gehalt an (c) in der Reaktionsmischung kann über eine Kontrolleinheit bevorzugt automatisch auf der Grundlage dieser Dichte reguliert werden. Die Komponentendichte kann während der üblichen Zirkulation des Materials in der Maschine auch bei sehr niedriger Zirkulationsgeschwindigkeit online bestimmt und reguliert werden.

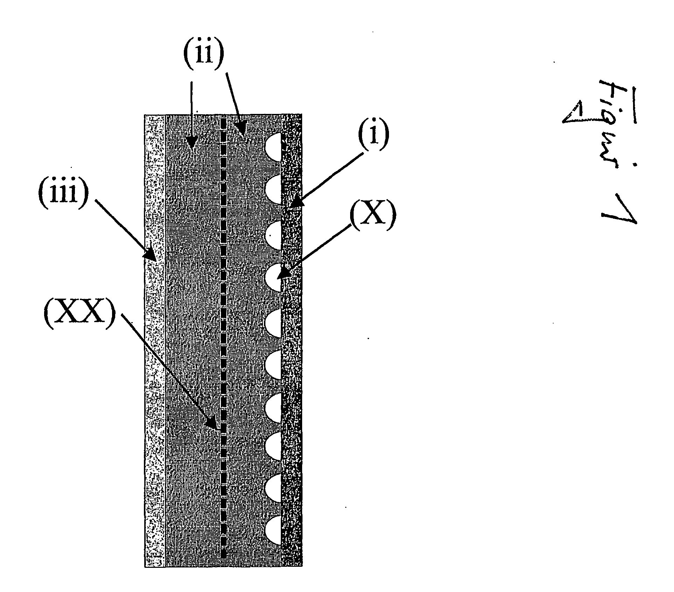

Ein erfindungsgemäßer Behälter ist beispielhaft in der Figur 1 dargestellt. Dabei bedeuten (X) die Heizelemente, z.B. Heizschlangen und (XX) ein Detektionssystem für Deckagen.

## Patentansprüche

1. Behälter, bei dem es sich um einen Tank für Ölprodukte und/oder petrochemische Produkte handelt, mit einem Füllvolumen zwischen 1 m³ und 20000 m³, **dadurch gekennzeichnet, dass** der Behälter'ein Verbundelement enthält, das die folgende Schichtstruktur aufweist:
(i) 1 mm bis 20 mm Metall, Kunststoff oder Holz,
(ii) 5 mm bis 300 mm Polyisocyanat-Polyadditionsprodukt mit einer Dichte von 350 bis 1200 kg/m³
(iii) 1 mm bis 20 mm Metall, Kunststoff oder Holz,
wobei die Schicht (i) den Innenraum des Behälters begrenzt und die Schicht (iii) die Außenwand des Behälters darstellt und die Schicht (ii) zwischen der den Schichten (i) und (iii) angeordnet ist und in der Schicht (ii) Heizelemente (x) vorliegen.

2. Behälter gemäß Anspruch 1, **dadurch gekennzeichnet, dass** die Schichten (i) und (iii) verschiedene Metalle enthalten.

3. Behälter gemäß Anspruch 1, **dadurch gekennzeichnet, dass** die Schicht (i), die den Behälterinnenraum begrenzt, aus Edelstahl besteht und die Schicht (iii) aus einem von Edelstahl verschiedenen Metall.

4. Behälter gemäß Anspruch 1, **dadurch gekennzeichnet, dass** in der Schicht (ii) ein Detektionssystem (xx) für Leckagen vorliegt.

5. Behälter gemäß Anspruch 1, **dadurch gekennzeichnet, dass** es sich bei dem Behälter um den Treibstofftank eines Schiffes handelt.

6. Behälter gemäß Anspruch 1, **dadurch gekennzeichnet, dass** der Behälter eine runde Form aufweist.

7. Verfahren zur Herstellung von Behältern gemäß einem der Ansprüche 1 bis 6, **dadurch gekennzeichnet, dass** man mittels der Schicht (i) die innere Wand des Behälters, die den Innenraum des Behälters begrenzt, herstellt, anschließend die Schicht (iii) um die Schicht (i) formt und dann in einem oder mehreren Schritten die Schicht (ii) zwischen den Schichten (i) und (iii) herstellt.

8. Verfahren zur Herstellung von Behältern gemäß einem der Ansprüche 1 bis 6, **dadurch gekennzeichnet, dass** man vorgefertigte Verbundelemente enthaltend die Schichten (i), (ii), und (iii) zu dem Behälter zusammenfügt.

## Claims

1. A container, which is a tank for oil products and/or petrochemical products, with a capacity of from 1 to 20 000 m³, which comprises a composite element which has the following layer structure:
(i) from 1 to 20 mm of metal, plastic, or wood,
(ii) from 5 to 300 mm of polyisocyanate polyaddition product of density from 350 to 1200 kg/m³
(iii) from 1 to 20 mm of metal, plastic, or wood,
where the layer (i) delimits the space within the container, and the layer (iii) is the outer wall of the container, and the layer (ii) has been arranged between the layers (i) and (iii), and heating elements (X) are present in the layer (ii).

2. The container according to claim 1, wherein the layers (i) and (iii) comprise different metals.

3. The container according to claim 1, wherein the layer (i), which delimits the space within the container, is composed of high-specification steel, and the layer (iii) is composed of a metal other than high-specification steel.

4. The container according to claim 1, wherein a detection system (XX) for leakages is present in the layer (ii).

5. The container according to claim 1, which is the fuel tank of a ship.

6. The container according to claim 1, which has a round shape.

7. A process for producing containers according to any of claims 1 to 6, which comprises using the layer (i) to produce the inner wall of the container which delimits the space within the container, and then molding the layer (iii) around the layer (i), and then, in one or more steps, producing the layer (ii) between the layers (i) and (iii).

8. A process for producing containers according to any of claims 1 to 6, which comprises jointing prefabricated composite elements comprising the layers (i), (ii), and (iii) to give the container.

## Revendications

1. Contenant, qui est une cuve pour produits de pétrole et/ou produits pétrochimiques, ayant un volume de remplissage compris entre 1 m³ et 20 000 m³, **caractérisé en ce que** le contenant contient un élément composite qui présente la structure de couches suivante :
(i) 1 mm à 20 mm de métal, plastique ou bois,
(ii) 5 mm à 300 mm d'un produit de polyaddition de polyisocyanate ayant une densité de 350 à 1 200 kg/m³,
(iii) 1 mm à 20 mm de métal, plastique ou bois,
la couche (i) délimitant l'espace intérieur du contenant et la couche (iii) constituant la paroi extérieure du contenant, et la couche (ii) étant placée entre les couches (i) et (iii), et des éléments chauffants (X) étant présents dans la couche (ii).

2. Contenant selon la revendication 1, **caractérisé en ce que** les couches (i) et (iii) contiennent différents métaux.

3. Contenant selon la revendication 1, **caractérisé en ce que** la couche (i), qui délimite l'espace intérieur du contenant, est constituée d'acier inoxydable et la couche (iii) d'un métal différent de l'acier inoxydable.

4. Contenant selon la revendication 1, **caractérisé en ce qu'**un système de détection (XX) des fuites est présent dans la couche (ii).

5. Contenant selon la revendication 1, **caractérisé en ce que** le contenant est le réservoir de carburant d'un navire.

6. Contenant selon la revendication 1, **caractérisé en ce que** le contenant présente une forme ronde.

7. Procédé de fabrication de contenants selon l'une quelconque des revendications 1 à 6, **caractérisé en ce que** la paroi interne du contenant, qui délimite l'espace intérieur du contenant, est fabriquée au moyen de la couche (i), puis la couche (iii) est formée autour de la couche (i), puis la couche (ii) est fabriquée en une ou plusieurs étapes entre les couches (i) et (iii).

8. Procédé de fabrication de contenants selon l'une quelconque des revendications 1 à 6, **caractérisé en ce que** des éléments composites préfabriqués contenant les couches {i), (ii) et (iii) sont assemblés pour former le contenant.
